# EUROPEAN PATENT SPECIFICATION

(11) **EP 1 943 410 B1**
(45) Date of publication and mention of the grant of the patent: **23.11.2011**
(21) Application number: 06809800.3
(22) Date of filing: 29.10.2006
(51) Int. Cl.: F03G 7/00, F03G 7/04

(54) **METHOD AND SYSTEM FOR PRODUCING POWER FROM A SOURCE OF STEAM**
VERFAHREN UND SYSTEM ZUR ERZEUGUNG VON ENERGIE AUS EINER DAMPFQUELLE
PROCEDE ET SYSTEMES DESTINES A PRODUIRE DE L'ENERGIE A PARTIR D'UNE SOURCE DE VAPEUR

(30) Priority: 31.10.2005 US 261644; 06.02.2006 US 347309
(43) Date of publication of application: 16.07.2008
(73) Proprietor: Ormat Technologies Inc., Reno, NV 89511-1136 (US)
(72) Inventor: KAPLAN, Uri, Doar Na Emek Soreq (IL); KRIEGER, Zvi, Kefar Veradin (IL)
(74) Representative: White, Duncan Rohan
(86) International application number: PCT/IL2006/001239
(87) International publication number: WO 2007/052257

(56) References cited:
- CH-A- 554 999
- FR-A- 2 262 193
- US-A- 4 041 709
- US-A- 4 041 709
- US-A- 5 809 782
- US-A- 5 809 782
- US-A- 6 009 711
- US-A- 6 009 711

## Description

### Field of the Invention

The present invention relates to the field of energy production. More particularly, the invention relates to a method and system for producing power from geothermal steam, particularly geothermal fluid having a relatively low liquid content.

### Background of the Invention

There have been many attempts in the prior art to increase the utilization of the heat retained in a source of steam, in order to produce power. Two-phase geothermal steam has been shown to be a convenient and readily available source of power producing steam in many areas of the world.

In one method, water and steam are separated at a wellhead of geothermal fluid, and the two fluids are utilized in separate power plants. However, the thermodynamic efficiency of a power plant operating on geothermal water may be too low to warrant the capital cost of the equipment.

US 5,038,567 discloses a method for utilizing separated geothermal water and geothermal steam in a single power plant. The geothermal water preheats the working fluid before the latter is introduced to a vaporizer, from the condenser cooled temperature to the temperature just below that of the vaporizer. The geothermal steam heats the working fluid within the vaporizer at conditions of constant temperature and pressure. The vaporized working fluid is expanded in a heat engine and the heat-depleted working fluid is condensed to produce condensate which is returned to the vaporizer.

US 5,660,042 discloses a similar method for using two-phase liquid in a single Rankine cycle power plant, and vaporized working fluid is applied in parallel to a pair of turbines, one of which may be a steam turbine.

US 5,664,419 discloses the use of a vaporizer, preheater, and recuperator. The vaporizer produces vaporized organic fluid to be expanded in the turbine and cooled geothermal steam. The preheater transfers sensible heat to the organic fluid from separated geothermal brine and from steam condensate from the vaporizer. The recuperator, which receives organic vapor exhausted from the turbine, permits additional heat to be used by the organic working fluid by heating condensed organic liquid pumped to the vaporizer through the recuperator and preheater.

US6009711, which is considered as the closest prior art, discloses an apparatus for producing power from a geothermal fluid that is a mixture of high pressure steam and brine comprising a separator, a steam turbine coupled to a generator, a steam condenser, the vaporised organic fluid is supplied to a superheater, an organic vapor turbine coupled to a generator, and an organic vapor condenser. A preheater is provided to preheat organic fluid condensate and whereby cooled steam condensate is produced. A recuperator is provided for transferring heat from heat depleted organic fluid to organic condensate.

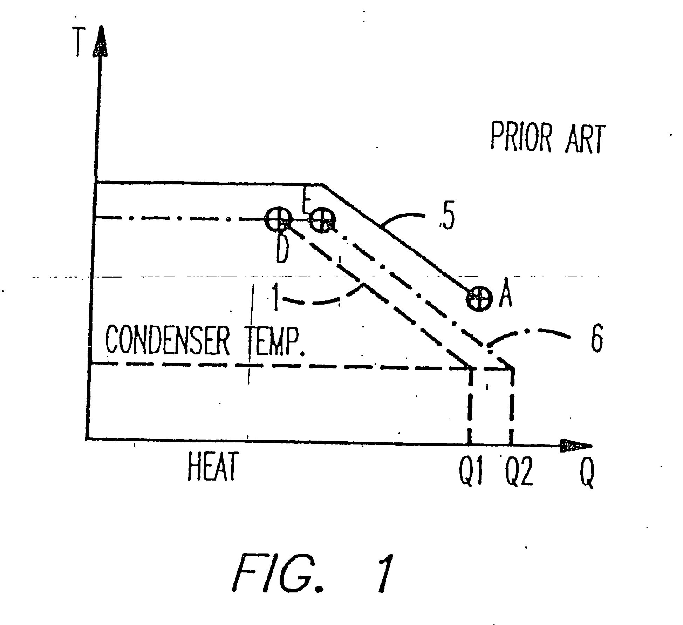

The use of a recuperator also allows heat to be more efficiently transferred from the geothermal steam to the organic working fluid. The efficient heat transfer from the geothermal steam to the organic working fluid is reflected by the similarity of the heat transfer rate of the working fluid with respect to that of geothermal steam. As shown in Fig. 1, which is a temperature T/heat Q diagram of both the working fluid and the geothermal steam, the heat transfer rate of the organic working fluid and of the geothermal steam is substantially similar. Curve 6 represents the heat transfer rate of the geothermal fluid as it enters the vaporizer and exits the preheater at point A, while curve 6 represents the heat transfer rate of the organic working fluid. The inclined portion of curve 6 from the condenser temperature and rising to point E, which is the boiling temperature of the working fluid, represents the sensible temperature rise of the working fluid as it flows through the preheater and vaporizer. Q2 represents the amount of heat input to the working fluid. The break point, or the discontinuity, of working fluid curve 6 is shown to be vertically below that of geothermal fluid curve 5, and therefore heat is efficiently transferred to the working fluid. As the gap between corresponding points of curves 5 and 6 increases, more beast is dissipated and less heat is transferred to the working fluid from the geothermal fluid. For purposes of comparison, curve 1 represents the heat transfer rate of working fluid of a power plant provided without a recuperator as it rises from the condenser temperature to point D following a heat input of Q1. The use of the recuperator therefore increases the heat input by an amount of Q2 - Q1.

At times, the liquid content of the geothermal fluid is not significantly high, and geothermal-bared power plants are forced to use a portion of the high-temperature and high-pressure geothermal steam to preheat the organic working fluid, resulting in ineffective heat utilization.

There is therefore a need to provide a geothermal-based power plant system for producing power with a relatively efficient rate of heat transfer from geothermal fluid having a relatively low liquid content to organic working fluid.

It is an object of the present invention to provide a geothermal-based power plant system for producing power with a relatively efficient rate of heat transfer from geothermal fluid having a relatively low liquid content to organic working fluid.

It is an additional object of the present invention to provide a method for achieving a similar heat transfer rate of the working fluid as that of geothermal fluid when the power plant system utilized geothermal fluid has a relatively low liquid content.

Other objects and advantages of the invention will become apparent as the description proceeds.

### Summary of the Invention

The present invention provides a powder plant system for producing power using a source of steam in accordance with claim 1.

The present invention is also directed to a method for reducing the difference between heat efflux from power producing steam and heat influx into the working fluid in accordance with claim 10.

### Brief Description of the Drawings

In the drawings:
- Fig. 1 is a temperature/heat diagram of a prior art geathermal-based power plant system provided with a recuperator;
- Fig. 2 is a temperature/heat diagram of a prior art power plant system powered by geothermal steam having a relatively low liquid content;
- Fig. 3 is a block diagram of a geothermal-based power plant system provided with steam and organic turbines, according to one embodiment of the present invention;
- Fig. 3A is a block diagram of a geothermal-based power plant system provided with steam and organic turbines, similar to the embodiment of the present invention shown in Fig. 3;
- Fig. 4 is a temperature/heat diagram for the power plant system of Fig. 3;
- Fig. 4A is also a temperature/heat diagram for another power plant system shown in Fig. 10;
- Fig. 5 is a block diagram of a geothermal-based power plant system provided with one organic turbine, according to another embodiment of the invention;
- Fig. 5A is a block diagram of a geothermal-based power plant system provided with one organic turbine, according to another optional arrangement of the embodiment of the invention shown in and described with reference to Fig. 5;
- Fig. 5B is a block diagram of a geothermal-based power plant system provided with one organic turbine, according to another optional arrangement of the embodiment of the invention shown in and described with reference to Fig. 5;
- Fig. 5C is a block diagram of a geothermal-based power plant system provided with one organic turbine, according to another optional arrangement of the embodiment of the invention shown in and described with reference to Fig. 5;
- Fig. 6 is a temperature/heat diagram for the power plant system of Fig. 5
- Fig. 6A is also a temperature/heat diagram for another power plant system shown in Fig. 6;
- Fig. 7 is a block diagram of a geothermal-based power plant system provided with two organic turbines, according to another embodiment of the invention;
- Fig. 7A is a block diagram of a geothermal-based power plant system provided with two organic turbines, according to according to another optional arrangement of the embodiment of the invention shown in and described with reference to Fig. 7;
- Fig. 7B is a block diagram of a geothermal-based power plant system provided with two organic turbines, according to according to another optional arrangement of the embodiment of the invention shown in and described with reference to Fig. 7;
- Fig. 7C is a block diagram of a geothermal-based power plant system provided with two organic turbines, according to according to another optional arrangement of the embodiment of the invention shown in and described with reference to Fig. 7;
- Fig. 8 is a schematic drawing of a multi-stage steam turbine;
- Fig. 9 is a block diagram of a power plant system powered by industrial steam which is provided with steam and organic turbines, according to another embodiment of the present invention; and
- Fig. 10 is a block diagram of a power plant system powered by industrial steam which is provided with steam and organic turbines, according to a further embodiment of the present invention.

### Detailed Description of Preferred Embodiments

The present invention is related to a method and system for producing power with improved heat utilization from geothermal fluid having a relatively low liquid content. While the heat transfer rate of organic working fluid with respect to geothermal fluid of prior art geotheimal-based power plants employing geothermal fluid having a relatively high liquid content to an organic working fluid is substantially similar, the heat transfer rate of organic working fluid with respect to geothermal fluid is significantly different when the geothermal fluid has a relatively low liquid content.

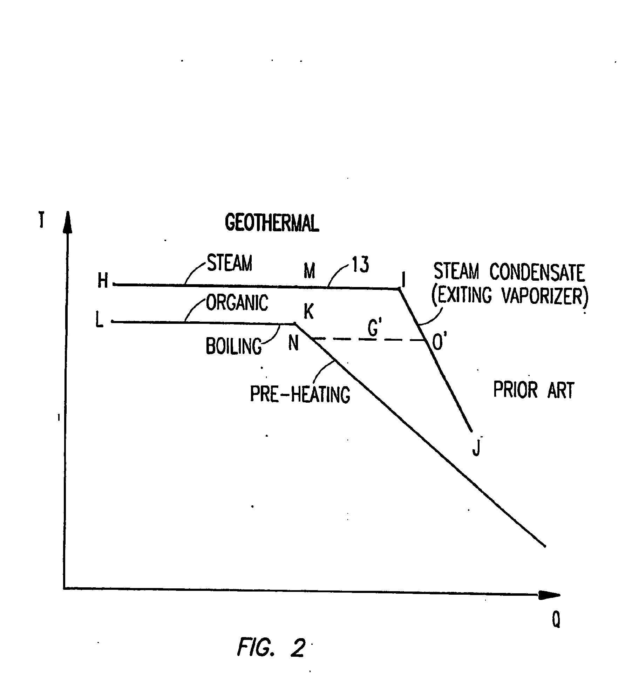

Fig. 2 illustrates a temperature T/heat Q diagram of both the working fluid and the geothermal steam for a prior art geothermal-based power plant employing a geothermal fluid which has a relatively low liquid content, necessitating relatively high-temperature and high-pressure geothermal steam to be delivered to a preheater in order to heat the organic working fluid before the latter is delivered to the vaporizer. Curve 13 indicated by a solid line represents the heat transfer rate of the geothermal steam as it undergoes constant-temperature heat transfer to the organic working fluid within the vaporizer front point H to point I and varying-temperature heat transfer to the organic working fluid within the preheater from point I to point J, while curve 14 indicated by a dashed line represents the heat transfer rate of the organic working fluid. The temperature of the organic working fluid increases within the preheater to point K, and the heat input to the working fluid increases within the vaporizer from point K to point L. Between points H and M of curve 13, the heat transfer rates of the geothermal steam and organic working fluid are equal. However, from point M to point I of curve 13, the heat transfer rates of the geothermal steam and organic working fluid within the preheater differ. As the gap, or the difference between heat efflux from the geothermal steam and heat influx absorbed by the working fluid, between corresponding points of curves 13 and 14 increases, more heat is dissipated and less heat is transferred to the working fluid from the geothermal fluid. A comparison of the heat transfer rates of, or an analysis of the gap between, the curves of the geothermal steam and organic working fluid is therefore beneficial in determining the efficiency of heat utilization.

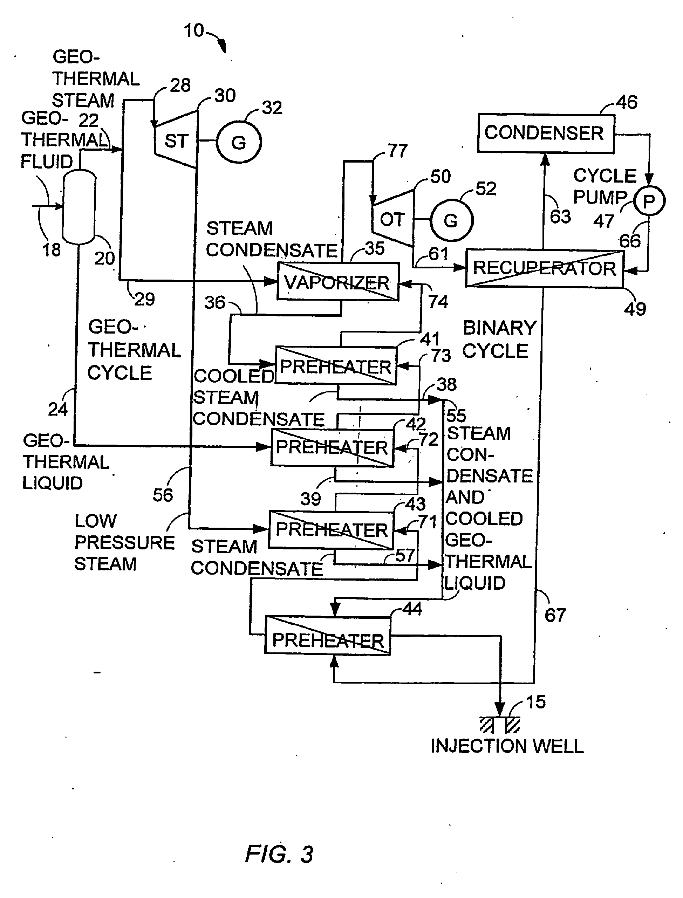

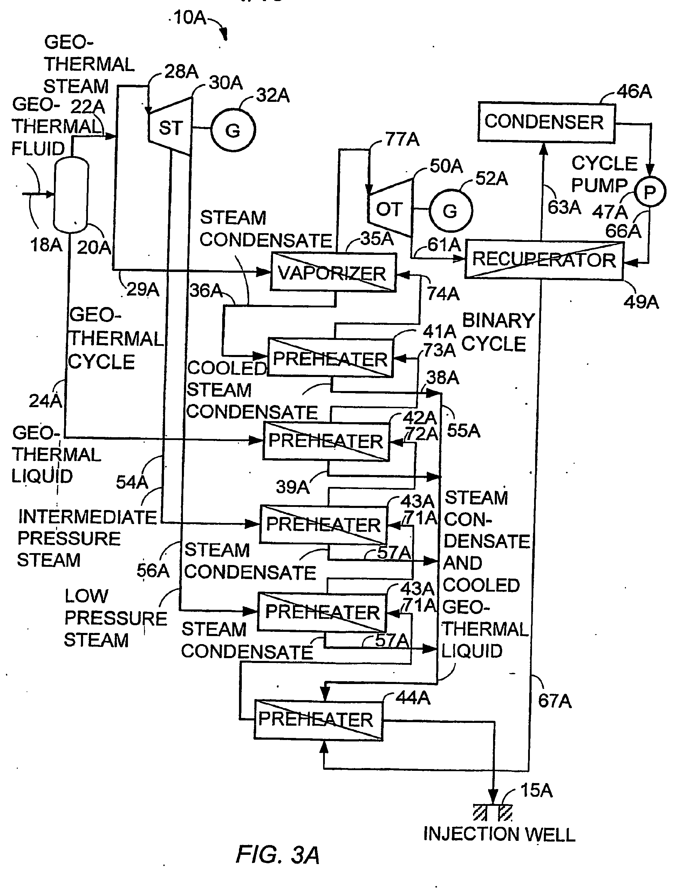

Fig. 3 illustrates a power plant that produces power by means of a steam turbine (ST), which can be single or multi-staged and an organic fluid turbine (OT) operating according to an organic Rankine cycle wherein the energy source is a geothermal fluid which has a relatively low liquid content. The power plant system generally designated by reference numeral 10 is embodied by an open geothermal cycle represented by thick fluid lines wherein power producing geothermal fluid is delivered by production well 12 and rejected into injection well 15, and a closed binary cycle represented by thin fluid lines wherein binary working fluid extracts heat from the geothermal fluid to produce power in the OT.

Power plant system 10 comprises separator 20, steam turbine 30, generator 32 coupled to ST 30, vaporizer 35, cascading preheaters 41-44, condenser 46, pump 47, recuperator 49, organic fluid turbine 50, and generator 52 coupled to OT 50.

Geothermal fluid having a relatively low liquid content is delivered in line 18 to separator 20 and is separated thereby into geothermal steam flowing in line 22 and geothermal liquid flowing in line 24. The geothermal steam branches into lines 28 and 29, and consequently is advantageously used to both produce power in ST 30 and to vaporize binary cycle working fluid, e.g. preferably pentane and isopentane, (hereinafter referred to as "working fluid") so that the working fluid will produce power in OT 50. Geothermal steam of line 29 vaporizes preheated working fluid. The resulting geothermal steam condensate is delivered via line 36 to fourth-stage preheater 41, and after its heat is transferred to the working fluid by means of preheater 41, the discharged cooled geothermal steam condensate flows via line 38 to common conduit 55. Geothermal liquid, on the other hand, flowing in line 24 is delivered to third-stage preheater 42 and is discharged therefrom via line 39 to common conduit 55. Low pressure steam from the exhaust of ST 30 is delivered via line 56 to second-stage preheater 43 and is discharged therefrom as steam condensate, which is delivered via line 67 to common conduit 55. The geothermal fluid discharged from preheaters 41-43 is combined in common conduit 55 and is delivered to first-stage preheater 44. The geothermal fluid discharged from preheater_44 is_then rejected into injection well 15.

OT 50 exhausts heat depleted organic vapor, after work has been performed, via line 61 to recuperator 49. The organic vapor exits recuperator 49 via line 63 and is delivered to condenser 46, which condenses the vapor by means of a cooling fluid (not shown). Condensed working fluid is circulated by pump 47 through line 66 to recuperator 49, which is adapted to transfer heat from the heat depleted organic vapor to the condensed working fluid, and then through line 67 to first-stage preheater 44, from which the condensed working fluid is discharged via line 71. Additional heat is transferred to the working fluid by means of second-stage preheater 43, third-stage preheater 42, and fourth stage preheater 41 while the working fluid is discharged from these preheaters via lines 72-74, respectively. Preheated working fluid exiting fourth stage preheater 41 is supplied via line 74 to vaporizer 35. Vaporized working fluid produced in vaporizer 35 is delivered to OT 60 via line 77.

Fig. 3A shows a similar embodiment of the invention described with reference to Fig. 3 but shows an example of the use of a multi-stage, here shown as a two stage steam turbine. As can be seen from Fig. 3A, intermediate pressure steam is extracted from an intermediate stage of ST 30A and is delivered via line 54A to preheater 43'A where it transfers heat contained therein to organic working fluid and is discharged therefrom as steam condensate, which is delivered via line 57'A to common conduit 55A. Apart from this, the rest of the power plant as well as its operation is substantially identical to geothermal power plant system 10, shown in Fig. 3, and therefore for brevity need not be described.

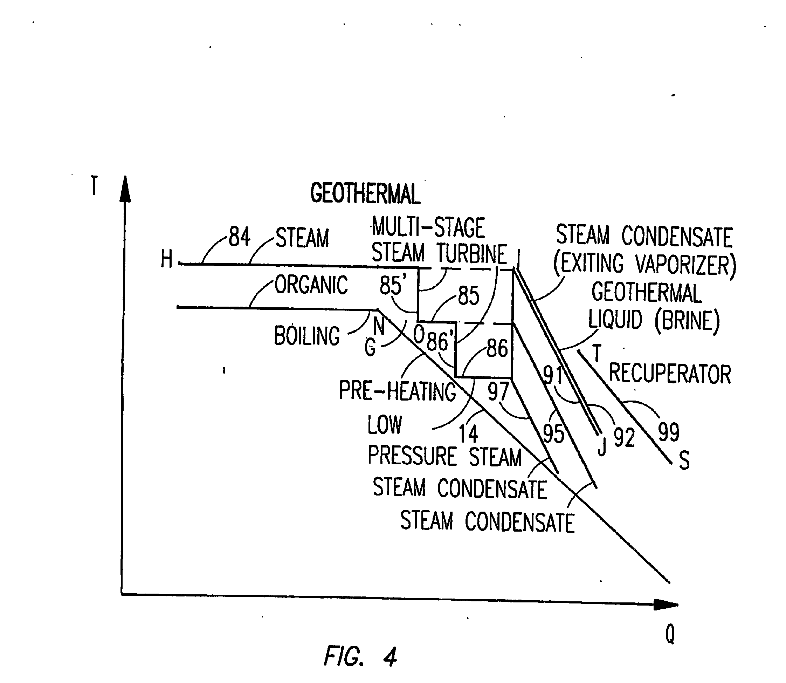

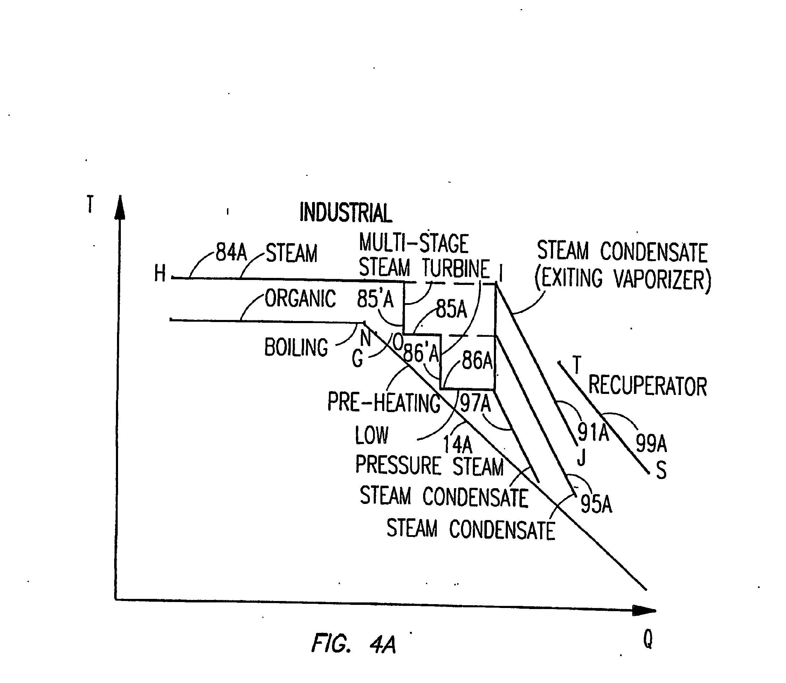

Fig. 4 illustrates a temperature/heat diagram for power plant system 10 of Fig. 3. This temperature/heat diagram is also applicable for the power plant system 10A of Fig. 3A. A portion of a plurality of curves, each of which corresponds to a different heat transfer process of power plant system 10, are shown in superimposed relation, to illustrate the reduced gap between corresponding points of the working fluid curve and one of the geothermal fluid curves with respect to the resulting gap of a prior art system shown in Fig. 2. Curve 14 represents the heat transfer rate of the working fluid, due to the heat influx by means of the preheaters and the vaporizer. Curve 99 represents the heat influx to the working fluid from point S to point T as it passes through the recuperator, after being delivered thereto from the condenser. Curve 84 represents the constant-temperature heat transfer rate of geothermal steam from point H to point I which is realized by means of the heat transfer process carried out within the vaporizer. Curves 85' and 86' represent the expansion of geothermal steam in the steam turbine, shown here illustratively as an example as a two-stage expansion of geothermal steam within the steam turbine, and curves 85 and 86 represent the corresponding low pressure steam that exits the steam at each of the two stages, respectively, and which is delivered to the second-stage preheater. Curve 91 represents the steam condensate which exits the vaporizer and which is delivered to the fourth-stage preheater. Curve 92 represents the geothermal liquid or brine which is delivered to the third-stage preheater. Curve 95 represents the steam condensate which exits the second-stage preheater and is mixed in the common conduit with the discharge from the third and fourth-stage preheaters, to be delivered to the first-stage preheater.

As can be clearly seen, gap G between point N of the working fluid curve 14 and corresponding point O of the low pressure steam curve 85 exiting one stage of the steam turbine is dramatically less, approximately 10%, than the gap G' of the prior art system shown in Fig. 2 between the same point N of the working fluid curve 14 and corresponding point O'. A gap indicative of the difference between heat efflux from the geothermal fluid and heat influx into the working fluid is graphically determined by constructing a horizontal line from a desired point of a curve.

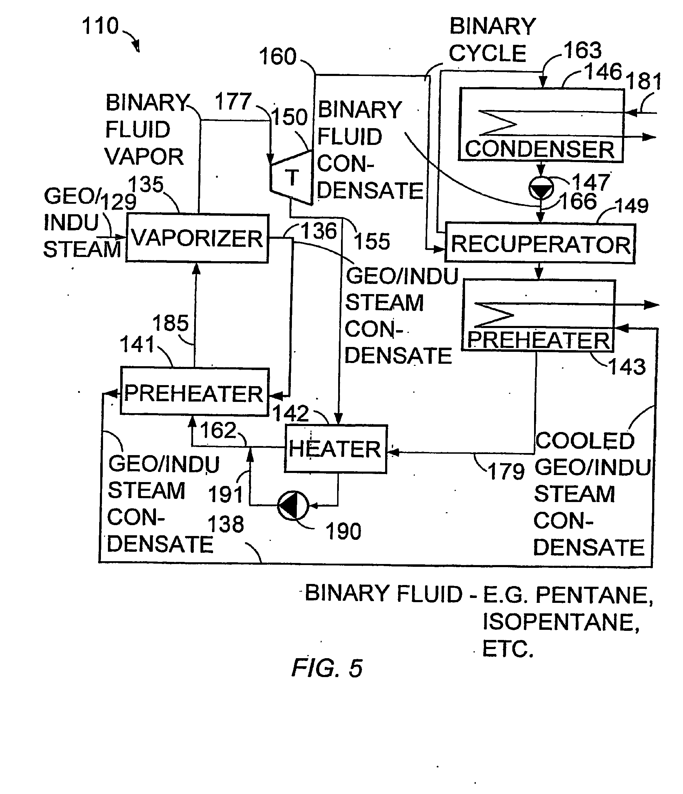

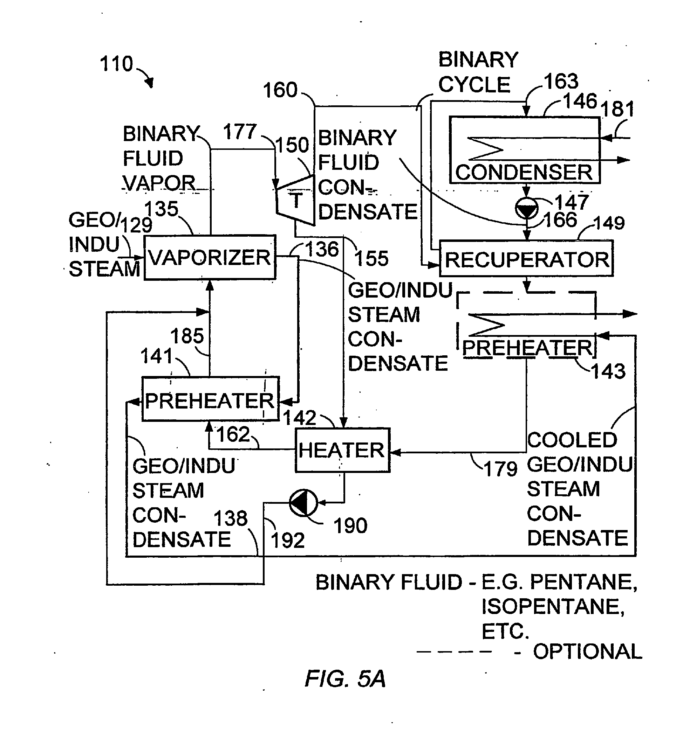

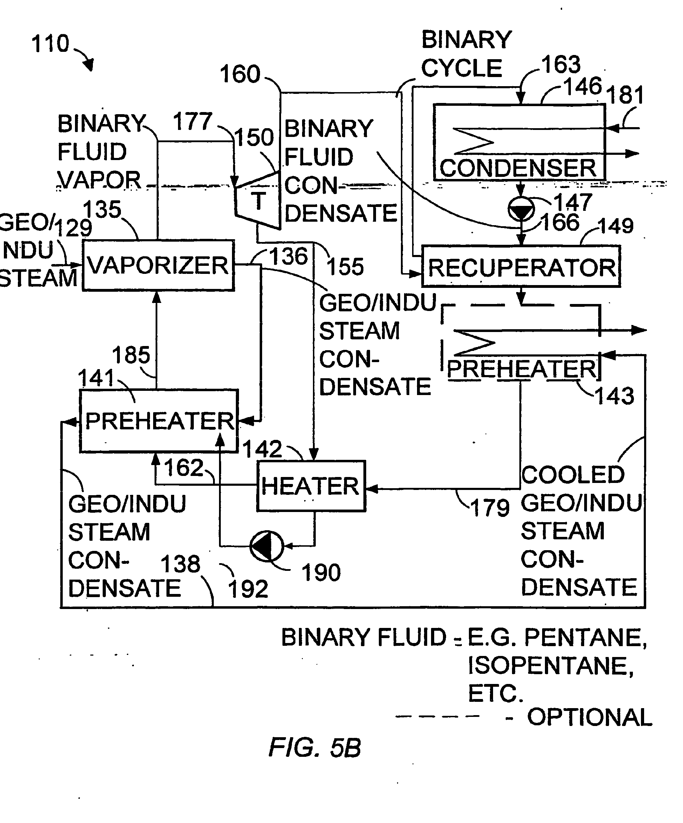

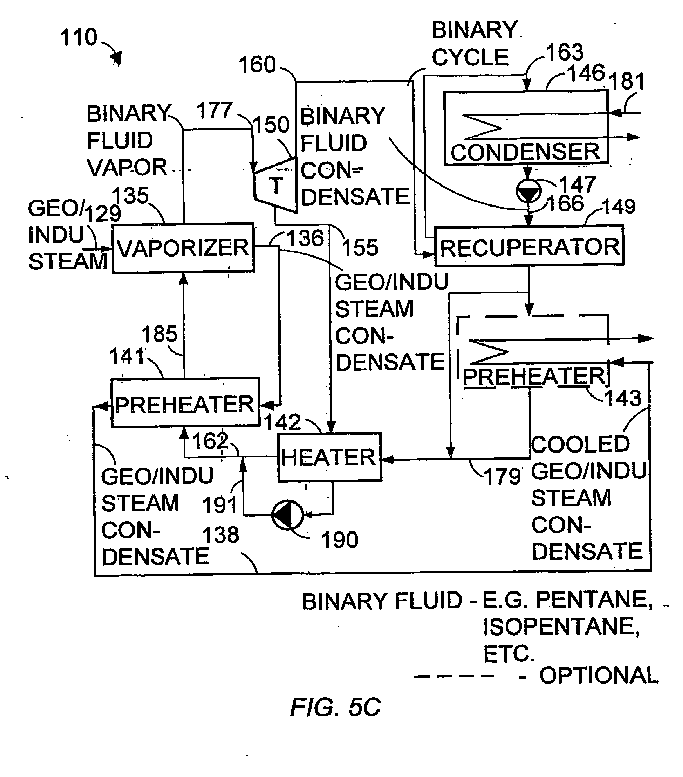

Fig. 5 illustrates another embodiment of the invention wherein power plant system 110 produces power by means of organic fluid turbine 150. The power plant system is embodied by an open geothermal cycle represented by thick fluid lines wherein power producing geothermal fluid having a low liquid content is delivered by a production well and rejected into an injection well and a closed binary cycle represented by thin fluid lines wherein binary working fluid extracts heat from the geothermal fluid to produce power in turbine 150.

Power plant system 110 comprises organic fluid turbine 150, a generator (not shown) coupled to turbine 150, vaporizer 135, a three-stage process for preheating the working fluid that includes heater 142 and preheaters 141 and 143, condenser 146, pump 147, and recuperator 149.

Geothermal steam flowing in line 129 is delivered to vaporizer 135 and vaporizes preheated working fluid. The resulting geothermal steam condensate is delivered via line 136 to third-stage preheater 141, and after its heat is transferred to the working fluid by means of preheater 141, the discharged geothermal steam condensate flows via line 138 to first-stage preheater 143, from which it is rejected into the injection well.

Vaporized working fluid is delivered to OT 150 via line 177.The exhaust from turbine 150 is discharged through 160..The turbine exhaust flowing through line 160 is delivered to recuperator 149, from which it exits via line 163, is delivered to condenser 146. Condensed working fluid, which is condensed by means of cooling fluid 181, is circulated by pump 147 via line 166 to recuperator 149 adapted to transfer heat from the organic vapor exhausted from OT 150 to the condensed working fluid, and then through line 167 to first-stage preheater 143. The working fluid is heated in first-stage preheater 143 by the geothermal steam condensate flowing through line 138, and is delivered via line 179 to second-stage heater 142 and then heated thereby by vapor extracted via the turbine bleed bled through line 165, and thereafter is delivered via line 162 to third-stage preheater 141 and then heated thereby by the geothermal steam condensate exited from vaporizer 135. The preheated working fluid exiting third-stage preheater 141 is then delivered to vaporizer 135 via line 185. Pump 190 assists in circulating the condensed turbine bleed exiting heater 142 via lines 191 and 162.

Under some circumstances, first-stage preheater 143 might not be used so that preheater 143 can be considered optional.

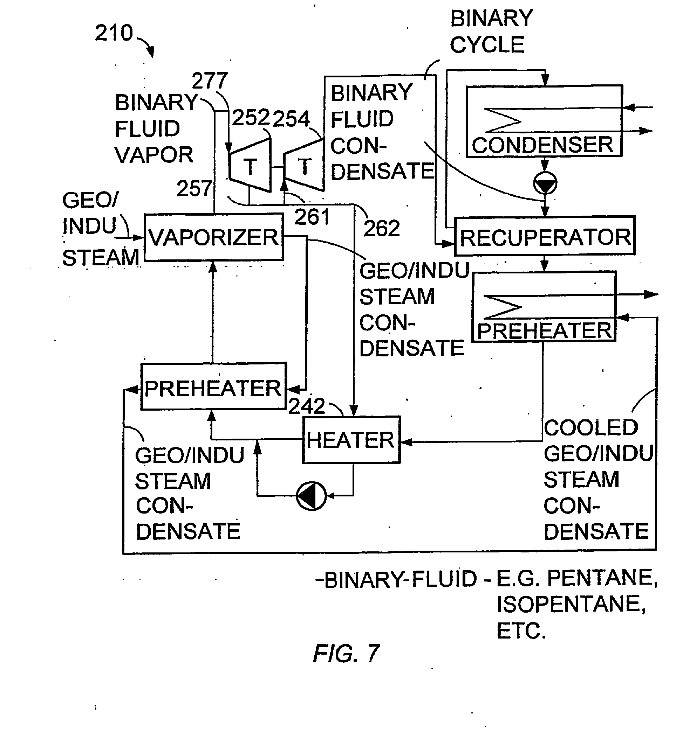

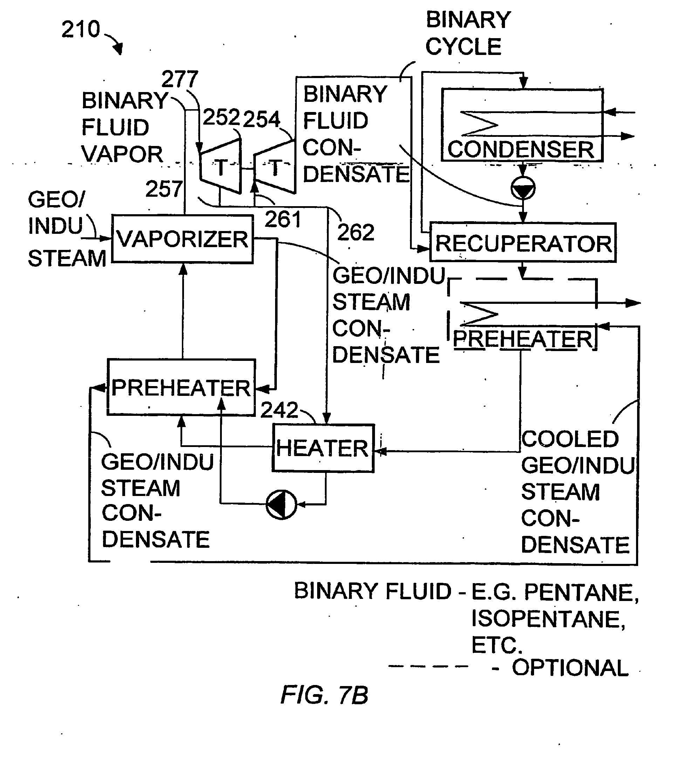

Furthermore, the heated working fluid output of pump 190 exiting heater 142 can be supplied to different locations in the working fluid cycle of the binary cycle power plant (see Figs. 5, 5A and 5B) in different optional configurations. In the option shown in Fig. 5, the output of the pump is supplied to the output of heater 142. In the option shown in Fig. 5A, the output of pump 190 is supplied to the output of third-stage preheater 141 and supplied to the vaporizer. In the option shown in Fig. 7B, the output of pump 190 is supplied to a suitable location in the third-stage preheater 141. In addition, in a further option, portion of the working liquid exiting recuperator 149 can be supplied to first-stage preheater 143 while a further portion can be supplied to the working fluid exiting the first-stage preheater 143 and that is supplied to heater 142 (see Fig. 5C).

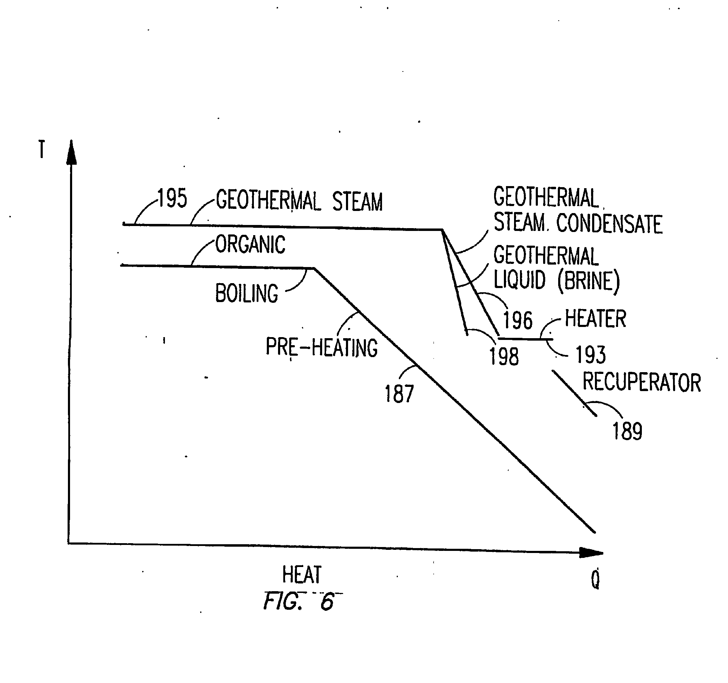

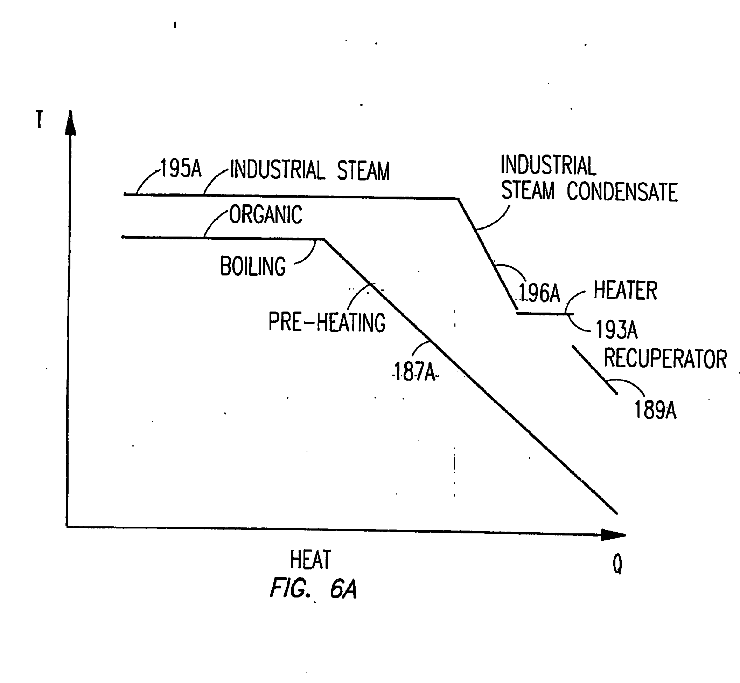

Fig. 6 illustrates a temperature/heat diagram for power plant system 110 of Fig. 5. A plurality of curve portions, each of which corresponds to a different heat transfer process of power plant system 110, are shown in superimposed relation. Curve 187 represents the heat transfer rate of the working fluid, due to the heat influx by means of the preheaters and the vaporizer. Curve 189 represents the heat influx from working fluid expanded vapor to the working fluid condensate as it passes through the recuperator, after being delivered thereto from the condenser. Curve 193 represents the constant-temperature heat influx from working fluid vapor (bled via line 155 from vapor turbine 150) to the working fluid as it passes through the heater. Curve 195 represents the constant-temperature heat transfer rate of geothermal steam by means of the heat transfer process carried out within the vaporizer. Curve 196 represents the steam condensate which exits the vaporizer and which is delivered to the third-stage preheater. Curve 198 represents the geothermal liquid which can be used for pre-heating

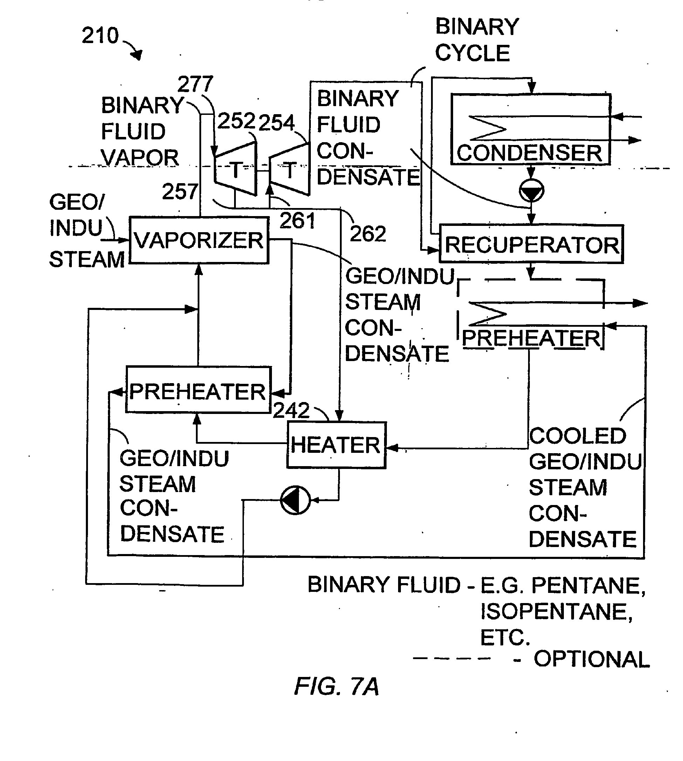

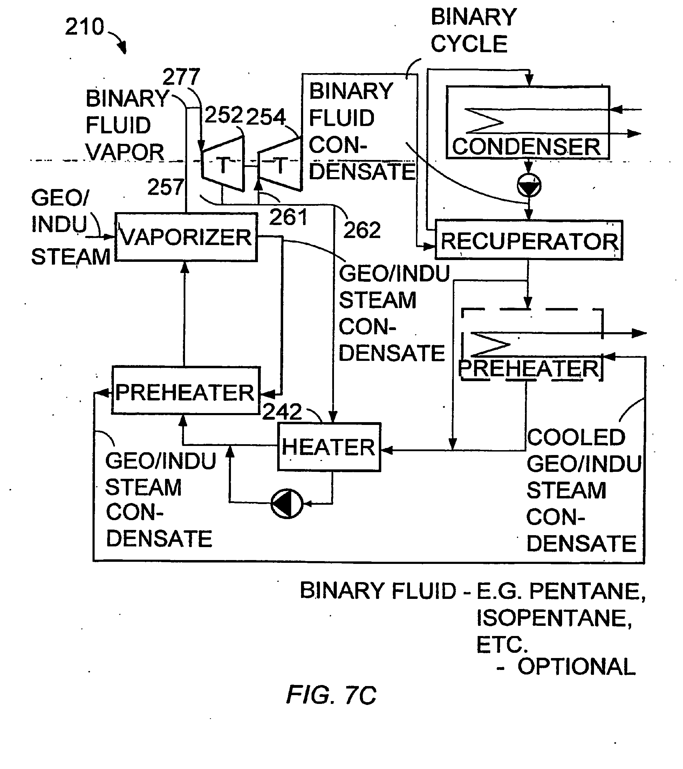

Fig. 7 illustrates another embodiment of the invention wherein power plant system 210 produces power by means of two organic fluid turbines 252 and 254 wherein turbine 252 is a high pressure turbine and turbine 254 is a low pressure turbine. Vaporized working fluid is delivered to high pressure turbine 252 via line 277. The exhaust from high pressure turbine 252 is discharged through line 257, and then branches to lines 261 and 262. The turbine exhaust flowing through line 261 is delivered to low pressure turbine 254, and the turbine exhaust flowing through line 262 is delivered to heater 242. The remaining heat transfer means are identical to power plant system 110 and therefore for brevity need not be described. Also in this embodiment, under some circumstances, the first-stage preheater which receives working fluid liquid from the recuperator might not be used so that this preheater can be considered optional.

Furthermore, the output of the pump extracting heated working fluid heated by heater 242 can be supplied to different locations in the working fluid cycle of the binary cycle power plant (see Figs. 7, 7A and 7B) in different optional configurations. In the option shown in Fig. 7, the output of the pump is supplied to the output of heater 242. In the option shown in Fig. 7A, the output of the pump is supplied to the output of third-stage preheater and supplied to the vaporizer. In the option shown in Fig. 7B, the output of the pump is supplied to a suitable location in the third-stage preheater. In addition, in a further option, portion of the working liquid exiting the recuperator can be supplied to the first-stage preheater while a further portion can be supplied to the working fluid exiting the first-stage preheater and that is supplied to heater 242 (see Fig. 7C).

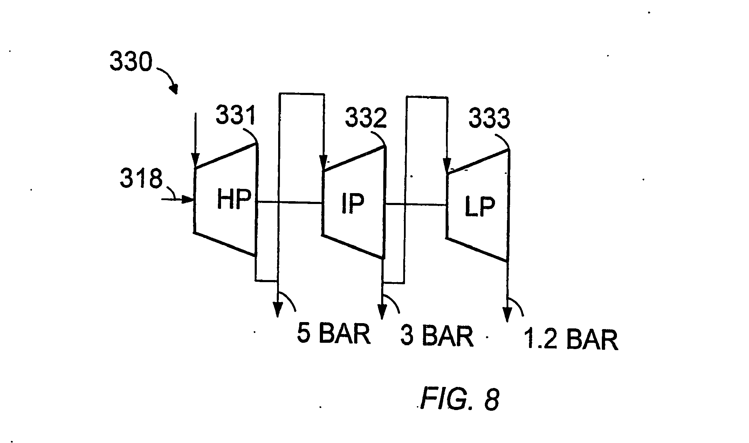

Figs. 8-12 illustrate another embodiment of the invention wherein the energy source for producing power with improved heat utilization is supplied by an industrial heat source such as industrial steam. Similar to the other embodiments of the invention, working fluid is vaporized by the steam to generate electricity and working fluid exiting the recuperator is preheated by turbine exhaust.

As shown in Fig. 8, industrial steam flowing through line 318 is utilized to generate electricity by means of multi-stage steam turbine 330 having high pressure (HP) stage 331, intermediate pressure (IP) stage 332, and low pressure (LP) stage 333. For example, the industrial steam delivered to the inlet of multi-stage turbine 330 at a pressure of about 12 bar, is expanded in HP 331 to a pressure of about 5 bar, further expanded in IP 332 to about 3 bar, and additionally expanded in LP 333 to about 1.2 bar. Steam is bled off from each of these stages for preheating the working fluid.

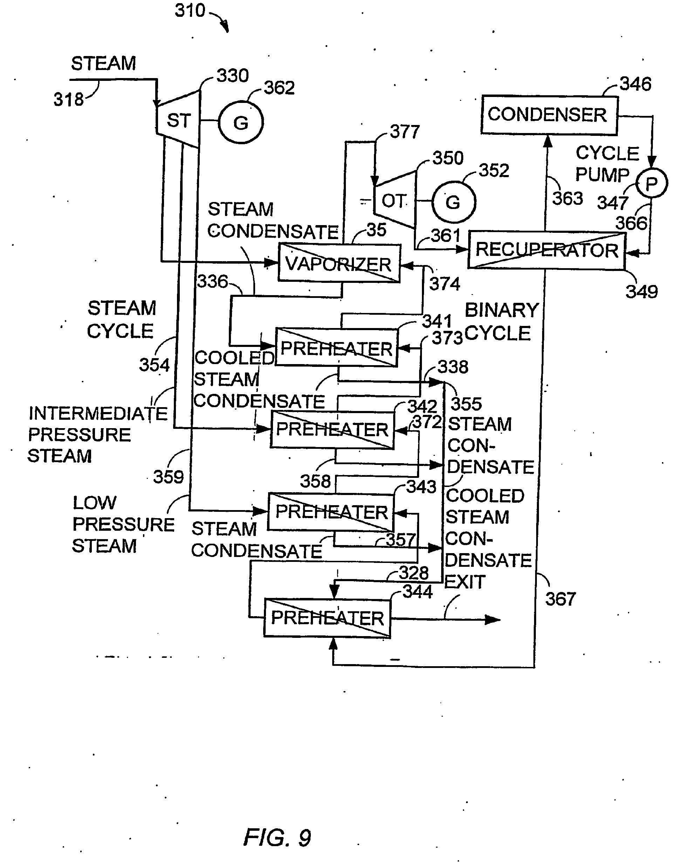

Fig. 9 illustrates a power plant generally designated by reference numeral 310 that produces power by means of a multi-stage steam turbine (ST) and an organic fluid turbine (OT) wherein the energy source is industrial steam. The power plant system comprises an open steam cycle (represented by thick fluid lines), wherein industrial steam is delivered through line 318 to ST 330 and cooled steam condensate is discharged through line 385 and a closed binary cycle (represented by thin fluid lines), wherein binary working fluid extracts heat from the industrial steam to produce power in the OT.

Power plant system 310 comprises multi-stage steam turbine 330, electric generator 362 coupled to ST 330, vaporizer 335, cascading preheaters 341-344, condenser 346, pump 347, recuperator 349, organic fluid turbine 350, and electric generator 352 coupled to OT 350.

Industrial steam delivered in line 318 to ST 330 expands therein to produce power, and is bled from each stage of ST 330 to transfer heat to the working fluid so that the latter will produce power in OT 350. Steam bled from the HP stage of ST 330 is delivered via line 339 to vaporizer 335 and used to vaporize preheated working fluid. The resulting steam condensate is delivered via line 336 to fourth-stage preheater 341, and after its heat is transferred to the working fluid by means of preheater 341, the discharged cooled steam condensate flows via line 338 to common conduit 355. Steam bled from the IP stage of ST 330 is delivered via line 354 to third-stage preheater 342 and after its heat is transferred to the working fluid by means of preheater 342, the discharged steam condensate flows therefrom via line 358 to common conduit 355. Steam bled from the LP stage of ST 330 is delivered via line 369 to second-stage preheater 343 and after its heat is transferred to the working fluid by means of preheater 343, is discharged therefrom as steam condensate, which is delivered via line 357 to common conduit 355. Fluid discharged from preheaters 341-343 is mixed within common conduit 355 and is delivered to first-stage preheater 344 via line 328. After its heat is transferred to the working fluid by means of the preheater, the cooled steam condensate discharged from first-stage preheater 344 exits via line 385.

OT 350 exhausts expanded organic vapor, after work has been performed, via line 361 to recuperator 349. The heat depleted expanded organic vapor exits recuperator 349 via line 363 and is delivered to condenser 346, which condenses the vapor by means of a cooling fluid (not shown). Working fluid condensate is circulated by pump 347 through line 366 to recuperator 349, where heat is transferred from the expanded organic vapor to the working fluid condensate, and then through line 367 to first-stage preheater 344, from which the preheated working fluid condensate is delivered via line 371 to second-stage preheater 343. Additional heat is transferred to the preheated working fluid condensate by means of second-stage preheater 343, third-stage preheater 342, and fourth stage preheater 341 while the preheated working fluid condensate is discharged from these preheaters via lines 372-374, respectively. Discharged preheated working fluid condensate is supplied via line 374 to vaporizer 335 and vaporized working fluid produced therein is delivered to OT 350 via line 377.

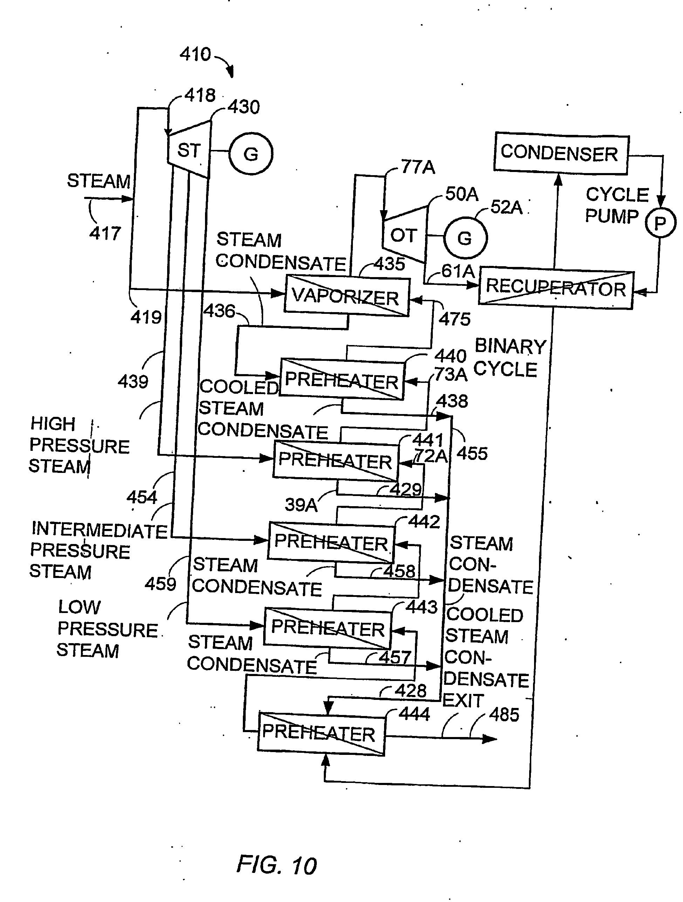

Fig. 10 illustrates another embodiment of the invention wherein power plant system 410 having an industrial steam energy source comprises five cascading preheaters 440-444 for transferring heat from the steam bled from multi-stage steam turbine 430 to the working fluid. The industrial steam delivered through line 417 branches into lines 418 and 419, which extend to ST 430 and vaporizer 435, respectively. Steam condensate resulting from the vaporization of the preheated working fluid, which is delivered from fifth-stage preheater 440 to vaporizer 435 via line 475, is delivered via line 436 to fifth-stage preheater 440, and after its heat is transferred to the working fluid by means of preheater 440, the discharged cooled steam condensate flows via line 438 to common conduit 455. Steam bled from the HP stage of ST 430 is delivered via line 439 to fourth-stage preheater 441 and after its heat is transferred to the working fluid by means of preheater 441, the steam condensate is discharged therefrom via line 429 to common conduit 455. Steam bled from the IP stage of ST 430 is delivered via line 454 to third-stage preheater 442 and after its heat is transferred to the working fluid by means of preheater 442, the steam condensate is discharged therefrom via line 458 to common conduit 455. Steam bled from the LP stage of ST 430 is delivered via line 459 to second-stage preheater 443 and, after its heat is transferred to the working fluid by means of preheater 443, is discharged therefrom as steam condensate, which is delivered via line 457 to common conduit 455. Fluid discharged from preheaters 440-443 is mixed in common conduit 455 and is delivered to first-stage preheater 444 via line 428. The cooled steam condensate discharged from first-stage preheater 444 exits via line 485. The remaining heat transfer means are identical to power plant system 310 and therefore for brevity need not be described.

While the embodiments shown and described with reference to Figs. 9 and 10 show three different outlets of steam turbine 330 or 430 for use of high, intermediate and low pressure steam in preheating the organic working fluid, usually two different outlets will suffice.

Furthermore, the relevant temperature/heat diagram for the industrial embodiment shown and described with reference to Fig. 10 operating at two different pressure levels is actually Fig. 4A. In such an industrial application, since no geothermal liquid is present, industrial steam condensate provides preheating of the organic working fluid as shown by curves 91A, 95A and 97A. The remaining heat transfer processes are identical to geothermal power plant system 10A, shown in Fig. 3A, and therefore for brevity need not be described.

It is to be pointed that while reference is made to Figs. 8-12 for describing an embodiment of the invention wherein the energy source for producing power with improved heat utilization is supplied by an industrial heat source such as industrial steam, such an industrial energy source can also be used in connection with the embodiments of the invention described with reference to Figs. 5 and 7. In such a case, Fig. 6A presents the relevant temperature/heat diagram for such an industrial application of the power plant. In such an industrial application, since no geothermal liquid is present, industrial steam condensate provides preheating of the organic working fluid as shown by curve 196A. The remaining heat transfer processes are identical to geothermal power plant system 110 and therefore for brevity need not be described.

Furthermore, while pentane and iso pentane are disclosed as the preferred working fluids other fluids can be used as working fluids such as butane and iso-butane, etc.

While some embodiments of the invention have been described by way of illustration, it will be apparent that the invention can be carried into practice with many modifications, variations and adaptations, and with the use of numerous equivalents or alternative solutions that are within the scope of

## Claims

1. A power plant system (10) for producing power using a source of steam, comprising:
a) a steam turbine (30) for expanding a portion of steam from said source of steam;
b) a vaporizer (35) into which a further portion of steam from the source of steam is supplied, for vaporizing organic working fluid flowing through said vaporizer (35);
c) an organic vapor turbine (50) to which said vaporized working fluid is supplied and which is suitable for generating electricity and producing expanded organic vapour;
d) a recuperator (49) for heating organic vapor condensate flowing towards said vaporizer (35) with said expanded organic vapor exhausted from said organic vapor turbine (50); and
e) staged preheating means (41, 42, 43, 44) for preheating in stages the organic working fluid exiting said recuperator (49) and flowing towards said vaporizer (35), wherein
(i) a first preheating means (44) for preheating said organic fluid exiting said recuperator with heat extracted from steam condensate to produce a preheated organic working fluid; and
(ii) a second preheating means (43) for additionally preheating said preheated organic working fluid using steam exiting said steam turbine (30) to produce additionally preheated organic working fluid.

2. The power plant (10)system according to claim 1, wherein the source of steam is geothermal steam

3. The power plant system (10) according to claim 1 wherein the source of steam is industrially generated steam.

4. The power plant system (10) according to claim 1 wherein four stages of preheating means (41, 42, 43, 44)are employed.

5. The power plant system (10) according to claim 1, wherein the second preheating means (43) is a preheater by which organic fluid passing therethrough is preheated.

6. The power plant systezu(10) according to claim 5, wherein the steam turbine (30) is a multi-stage steam turbine.

7. The power plant system (10) according to claim 1, further comprising a third preheater means (41) for further preheating the additionally preheated organic working fluid using steam condensate exiting the vaporiser (74), wherein the steam condensate from the third preheater mneans (41) is provided to said first preheater means to preheat the organic fluid exiting the recuperator (49).

8. The power plant system (10) according to claim 1, wherein the source of steam is Geothermal steam separated from a geothermal liquid, the powerplant system (10) further comprising a further preheater means (42) for yet further preheating the additionally preheated organic working fluid using heat present in the geothermal liquid.

9. The power plant system (10) according to claim 8, wherein the first preheater means (44) for preheating the organic working fluid also uses heat present in cooled geothermal liquid exiting the further preheater means (42).

10. A method for reducing the difference between heat efflux from power producing steam and heat influx into a working fluid, comprising the steps of:
a) supplying a portion of steam from a source of steam to a vaporizer (35), for vaporizing organic working fluid flowing therethrough;
b) supplying another portion of steam from the source of steam to a steam turbine (30);
c) delivering said vaporized working fluid to an organic fluid turbine (50) to generate electricity and produce expanded organic vapor;
d) heating organic vapor condensate flowing towards said vaporizer (35) within a recuperator (49) by means of said expanded organic vapor exhausted from said organic vapor turbine (50); and
e) preheating the organic working fluid exiting said recuperator (49) with heat extracted from steam condensate to produce a preheated organic working fluid; and
f) additionally preheating the preheated organic fluid using steam exiting the steam turbine to produce additionally prebeated organic working fluid.

11. The method according to claim 10, further comprising the steps of separating a geothermal steam from a geothermal liquid, and using the separated geothermal steam as the source of said steam having portions supplied to the vaporiser (35) and the steam turbine (30).

12. The method according to claim 10, wherein the source of steam is industrially generated steam.

## Patentansprüche

1. Kraftwerkssystem (10) zum Erzeugen von Energie unter Verwendung einer Dampfquelle, das Folgendes umfasst:
a) eine Dampfturbine (30), um einen Anteil des Dampfs aus der Dampfquelle expandieren zu lassen,
b) einen Verdampfer (35), in den ein weiterer Anteil des Dampfs aus der Dampfquelle eingespeist wird, um ein organisches Arbeitsfluid, das durch den Verdampfer (35) strömt, zu verdampfern,
c) eine Turbine (50) für organischen Dampf, der das verdampfte Arbeitsfluid zugeführt wird und die dafür geeignet ist, Elektrizität zu erzeugen und expandierten organischen Dampf zu produzieren,
d) einen Wärmeaustauscher (49), um das organische Dampfkondensat, das zu dem Verdampfer (35) hin strömt, mit dem aus der Turbine (50) für organischen Dampf ausgestoßene expandierten organischen Dampf zu erwärmen, und
e) abgestufte Vorwärmmittel (41, 42, 43, 44), um in Stufen das organische Arbeitsfluid vorzuwärmen, das aus dem Wärmeaustauscher (49) austritt und zu dem Verdampfer (35) hin strömt, wobei
(i) ein erstes Vorwärmmittel (44) dazu dient, das organische Fluid, das aus dem Wärmeaustauscher austritt, mit der dem Dampfkondensat entzogenen Wärme vorzuwärmen, um ein vorgewärmtes organisches Arbeitsfluid zu erzeugen, und
(ii) ein zweites Vorwärmmittel (43) dazu dient, um das vorgewärmte organische Arbeitsfluid unter Verwendung von aus der Dampfturbine (30) austretendem Dampf vorzuwärmen, um ein zusätzlich vorgewärmtes organisches Arbeitsfluid zu erzeugen.

2. Kraftwerkssystem (10) nach Anspruch 1, wobei die Dampfquelle geothermischer Dampf ist.

3. Kraftwerkssystem (10) nach Anspruch 1, wobei die Dampfquelle industriell erzeugter Dampf ist.

4. Kraftwerkssystem (10) nach Anspruch 1, wobei vier Stufen von Vorwärmmitteln (41, 42, 43, 44) eingesetzt werden.

5. Kraftwerkssystem (10) nach Anspruch 1, wobei das zweite Vorwärmmittel (43) ein Vorwärmer ist, durch den das durch denselben strömende organische Arbeitsfluid vorgewärmt wird.

6. Kraftwerkssystem (10) nach Anspruch 5, wobei die Dampfturbine (30) eine mehrstufige Dampfturbine ist

7. Kraftwerkssystem (10) nach Anspruch 1, das ferner ein drittes Vorwärmmittel (41) umfasst, um das zusätzlich vorgewärmt organische Arbeitsfluid unter Verwendung von Dampfkondensat, das aus dem Verdampfer (74) austritt, weiter vorzuwärmen, wobei das Dampfkondensat aus dem dritten Vorwärmmittel (41) dem ersten Vorwärmmittel bereitgestellt wird, um das aus dem Wärmeaustauscher (49) austretende organische Arbeitsfluid vorzuwärmen.

8. Kraftwerkssystem (10) nach Anspruch 1, wobei die Dampfquelle geothermischer Dampf ist, der von einer geothermischen Flüssigkeit abgetrennt wird, wobei das Kraftwerkssystem (10) ferner ein weiteres Vorwärmmittel (42) umfasst, um das zusätzlich vorgewärmte organische Arbeitsfluid unter Verwendung der in der geothermischen Flüssigkeit vorhandenen Wärme noch weiter vorzuwärmen.

9. Kraftwerkssystem (10) nach Anspruch 8, wobei das erste Vorwärmmittel (44) zum Vorwärmen des organischen Arbeitsfluids ebenfalls die Wärme verwendet, die in der aus dem weiteren Vorwärmmittel (42) austretenden geothermischen Flüssigkeit vorhanden ist.

10. Verfahren zum Verringern des Unterschieds zwischen einem Wärmeabfluss aus Energieerzeugungsdampf und dem Wärmezufluss in ein Arbeitsfluid, wobei das Verfahren die folgenden Schritte umfasst:
a) das Zuführen eines Dampfanteils aus einer Dampfquelle zu einem Verdampfer (35), um ein organisches Arbeitsfluid, das durch denselben strömt, zu verdampfen,
b) das Zuführen eines anderen Dampfanteils aus der Dampfquelle zu einer Dampfturbine (30),
c) das Liefern des verdampften Arbeitsfluids an eine Turbine (50) für organischen Dampf, um Elektrizität zu erzeugen und expandierten organischen Dampf zu produzieren,
d) das Erwärmen des organischen Dampflcondensats, das zu dem Verdampfer (35) hin strömt, innerhalb eines Wärmeaustauschers (49), mit Hilfe des aus der Turbine (50) für organischen Dampf ausgestoßenen expandierten organischen Dampfs und
e) das Vorwärmen des organischen Arbeitsfluids, das aus dem Wärmeaustauscher (49) austritt, mit der dem Dampfkondensat entzogenen Wärme, um ein vorgewärmtes organisches Arbeitsfluid zu erzeugen, und
f) das zusätzliche Vorwärmen des vorgewärmten organischen Arbeitsfluids unter Verwerdung von aus der Dampfturbine austretendem Dampf, um ein zusätzlich vorgewärmtes organisches Arbeitsfluid zu erzeugen.

11. Verfahren nach Anspruch 10, das ferner die Schritte umfasst, einen geothermischen Dampf von einer geothermischen Flüssigkeit abzutrennen und den abgetrennten geothermischen Dampf als die Dampfquelle zu verwenden, die Anteile hat, die dem Verdampfer (35) und der Dampfturbine (30) zugeführt werden.

12. Verfahren nach Anspruch 10, wobei die Dampfquelle industriell erzeugter Dampf ist.

## Revendications

1. Système de centrale électrique (10) pour produire de l'énergie électrique en utilisant une source de vapeur, comprenant :
a) une turbine à vapeur (30) pour détendre une partie de la vapeur provenant de ladite source de vapeur :
b) un évaporateur (35), dans lequel est amenée une partie additionnelle de la vapeur provenant de la source de vapeur, pour évaporer un fluide de travail organique s'écoulant à travers ledit évaporateur (35) ;
c) une turbine à vapeur organique (50), vers laquelle est amené ledit fluide de travail évaporé, et appropriée pour produire de l'électricité et pour produire de la vapeur organique détendue ;
d) un récupérateur (49) pour chauffer le condensat de vapeur organique s'écoulant vers ledit évaporateur (35) avec ladite vapeur organique détendue s'échappant de ladite turbine à vapeur organique (50) ; et
e) un moyen de préchauffage étagé (41, 42, 43, 44) pour préchauffer par étages le fluide de travail organique sortant dudit récupérateur (49) et s'écoulant vers ledit évaporateur (35), dans lequel
(i) un premier moyen de préchauffage (44) sert à préchauffer ledit fluide organique sortant dudit récupérateur avec la chaleur extraite du condensat de vapeur, pour produire un fluide de travail organique préchauffé ; et
(ii) un deuxième moyen de préchauffage (43) sert à assurer un préchauffage additionnel dudit fluide de travail organique préchauffé en utilisant la vapeur sortant ladite turbine à vapeur (30) pour produire un fluide de travail organique préchauffé additionnel.

2. Système de centrale électrique (10) selon la revendication 1, dans lequel la source de vapeur est de la vapeur géothermique.

3. Système de centrale électrique (10) selon la revendication 1, dans lequel la source de vapeur est de la vapeur à production industrielle.

4. Système de centrale électrique (10) selon la revendication 1, utilisant quatre étages de moyens de préchauffage (41, 42, 43, 44).

5. Système de centrale électrique (10) selon la revendication 1, dans lequel le deuxième moyen de préchauffage (43) est un moyen de préchauffage servant à préchauffer le fluide organique le traversant.

6. Système de centrale électrique (10) selon la revendication 5, dans lequel la turbine à vapeur (30) est une turbine à vapeur multi-étages.

7. Système de centrale électrique (10) selon la revendication 1, comprenant en outre un troisième moyen de préchauffage (41) pour assurer un préchauffage additionnel du fluide de travail organique par l'intermédiaire du condensat de vapeur sortant de l'évaporateur (74), le condensat de vapeur provenant du troisième moyen de préchauffage (41) étant amené vers ledit premier moyen de préchauffage pour assurer le préchauffage du fluide organique sortant du récupérateur (49).

8. Système de centrale électrique (10) selon la revendication 1, dans lequel la source de vapeur est de la vapeur géothermique séparée d'un liquide géothermique, le système de centrale électrique (10) comprenant en outre un moyen de préchauffage additionnel (42) pour assurer un préchauffage additionnel ultérieur du fluide de travail organique à préchauffage additionnel par l'intermédiaire de la chaleur présente dans le liquide géothermique.

9. Système de centrale électrique (10) selon la revendication 8, dans lequel le premier moyen de préchauffage (44) servant au préchauffage du fluide de travail organique utilise également la chaleur présente dans le liquide géothermique sortant du moyen de préchauffage additionnel (42).

10. Procédé de réduction de la différence entre la chaleur sortant d'une vapeur de production d'énergie et la chaleur rentrant dans un fluide de travail, comprenant les étapes ci-dessous :
a) amenée d'une partie de la vapeur provenant d'une source de chaleur vers un évaporateur (35) pour évaporer le fluide de travail organique le traversant ;
b) amenée d'une autre partie de la vapeur provenant de la source de chaleur vers une turbine à vapeur (30) ;
c) amenée dudit fluide de travail évaporé vers une turbine à fluide organique (50) pour produire de l'électricité et pour produire une vapeur organique détendue ;
d) chauffage du condensat de vapeur organique s'écoulant vers ledit évaporateur (35) dans un récupérateur (49) par l'intermédiaire de ladite vapeur organique détendue s'échappant de ladite turbine à vapeur organique (50) ; et
e) préchauffage du fluide de travail organique sortant dudit récupérateur (49) avec la chaleur extraite du condensat de vapeur pour produire un fluide de travail organique préchauffé ; et
f) préchauffage additionnel du fluide organique préchauffé par l'intermédiaire de la vapeur sortant de la turbine à vapeur pour produire un fluide de travail organique à préchauffage additionnel.

11. Procédé selon la revendication 10, comprenant en outre les étapes de séparation d'une vapeur géothermique d'un liquide géothermique, et d'utilisation de la vapeur géothermique séparée comme source de ladite vapeur, comportant des parties amenées vers l'évaporateur (35) et la turbine à vapeur (30).

12. Procédé selon la revendication 10, dans lequel la source de vapeur est de la vapeur à production industrielle.
